(19) Europäisches Patentamt
European Patent Office
Office européen des brevets

(11) Publication number : **0 650 983 A1**

(12) # EUROPEAN PATENT APPLICATION

(21) Application number : **94307803.0**

(51) Int. Cl.$^6$ : **C08F 36/04,** C08F 2/22

(22) Date of filing : **25.10.94**

(30) Priority : **01.11.93 US 143584**

(43) Date of publication of application :
**03.05.95 Bulletin 95/18**

(84) Designated Contracting States :
**DE ES FR GB IT NL**

(71) Applicant : **GENERAL ELECTRIC COMPANY**
**1 River Road**
**Schenectady, NY 12345 (US)**

(72) Inventor : **White, Dwain Montgomery**
**2334 Saint Joseph Drive**
**Schenectady, New York 12309 (US)**
Inventor : **Gordon, Janet Lisa**
**708 Crescent Village**
**Clifton Park, New York 12065 (US)**

(74) Representative : **Pratt, Richard Wilson et al**
**London Patent Operation**
**G.E. Technical Services Co. Inc.**
**Essex House**
**12/13 Essex Street**
**London WC2R 3AA (GB)**

(54) **Process for producing polydiene latices.**

(57) A novel process for producing polybutadiene latices and homologs employs metal chelating agents and polymerization initiators during the emulsion polymerization of diene monomers and not chain transfer agents and electrolytes. Said process proceeds until substantially all of the diene monomers have polymerized.

EP 0 650 983 A1

## Field of the Invention

This invention relates to a process for producing polydiene latices. Particularly, a novel process for producing polybutadiene latices and homologs thereof is disclosed. Said novel process employs metal chelating agents and polymerization initiators but not chain-transfer agents and electrolytes during the emulsion polymerization of diene monomers which results in favorable polydiene latex production.

## Background of the Invention

Polydienes, such as polybutadiene, are a well known class of synthetic rubbers. They are often characterized as having high abrasion resistances as well as favorable flow properties. Because of their properties, synthetic rubbers are a desirable component in many commercial applications. Such applications include impact modifiers for plastics, conveyor belts, shoe soles as well as automobile tires.

Polydienes are commonly prepared by emulsion polymerization techniques. A simple recipe for emulsion polymerization comprises four ingredients: a monomer, a continuous phase (e.g., water), an emulsifier (e.g., sodium soap) and an initiator (e.g., potassium persulfate). Obtaining satisfactory polymerizations may be achieved by charging a reaction vessel with the above-referenced ingredients, removing atmospheric oxygen and maintaining temperatures at about 65°C. As a result of the above, the rate of conversion of monomer to polymer is about 10% per hour at about 65°C. Further, with increased amounts of initiator, the reaction rate will increase until it reaches a maximum.

In addition to the four ingredients described above, it is often conventional to employ a fifth ingredient, namely, chain-transfer agents/modifiers such as mercaptans. The mechanism by which mercaptans work is as follows: Growing polymer molecules are reduced by removing hydrogen from the mercaptan's sulfhydryl group. The polymerization of the reduced polymer molecule is terminated and an RS· radical (derived from the mercaptan) is formed. Said RS· radical is capable of adding to a monomer molecule and thus initiating additional polymer formation. Further, mercaptans serve as polymerization accelerators when a persulfate is the initiator. When the mercaptan is omitted, polymerization rates are slow and polymer production is low.

Accordingly, the first aspect of the instant invention is based on the discovery of a novel process for producing high molecular weight polydiene latices and particularly polybutadiene latices as well as homologs derived therefrom by employing metal chelating agents such as ethylenediaminetetraacetic acid (EDTA) and polymerization initiators such as potassium persulfate during the diene monomer polymerization stage of emulsion polymerization reactions. Said novel process is characterized by favorable polydiene production in the absence of conventionally used chain-transfer agents such as mercaptans which are notorious for their foul odor.

In a second aspect of the instant invention, polydiene latices and particularly polybutadiene latices as well as homologs thereof are produced in the absence of electrolytes such as tetrasodium pyrophosphate which conventionally tends to decrease the viscosity of polymer latices.

## Description of the Prior Art

Efforts for producing polybutadiene latices have been disclosed in the art. In U.S. Patent 3,833,532, polybutadiene latices are prepared via emulsion polymerization techniques. Said emulsion polymerization techniques employ dodecyl mercaptans as chain transfer agents in order to control polymer formation.

Still other investigators have focused their attention on polybutadiene production. In Conti et al., *Polymer 15*, 816-818 (1974), methods for producing polybutadienes utilizing Al-V and n-BuLi catalysts in organic solvents are disclosed.

The instant invention is patentably distinguishable from the above-mentioned references, since among other reasons, it relates to a process for producing polybutadiene latices which employs metal chelating agents and polymerization initiators during the diene monomer polymerization stage of emulsion polymerization reactions. Further, the instant invention is conducted in the absence of chain-transfer agents such as mercaptans and electrolytes including tetrasodium pyrophosphate.

## Summary of the Invention

The instant invention is a novel method for producing a polydiene latex. Said method comprises the step of subjecting diene monomers to a metal chelating agent and polymerization initiator under emulsion polymerization conditions to polymerize said diene monomers and produce a polydiene latex.

The diene monomers employed in the instant process may be represented by the formula

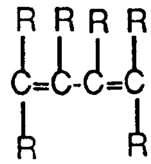 ,

wherein each R is independently a hydrogen, lower alkyl ($C_1$-$C_5$ hydrocarbon), halogen or substituted or unsubstituted aromatic radical. It is often preferred that R is hydrogen so that the diene monomers and polydiene latex are butadiene monomer and polybutadiene latex respectively. Additionally, the preferred metal chelating agents are tetrasodium ethylenediaminetetraacetate dihydrate, and trisodium nitrilotriacetate (NTA) or mixtures thereof. The preferred polymerization initiator is potassium persulfate.

It is noted that the above-mentioned emulsion polymerization conditions do not necessarily employ chain-transferring agents such as mercaptans nor do they necessarily employ electrolytes such as tetrasodium pyrophosphate.

It is further noted that the instant emulsion polymerization process unexpectedly proceeds until substantially all of the diene monomers have polymerized. Often, at least about 95% of all diene monomers polymerize. Moreover, it is often preferred that no more than about 5.0 weight percent but preferably about 0.1 to about 1.0 weight percent of said metal chelating agent is employed based on total weight of diene monomer in the emulsion polymerization system. Additionally, it is common to employ at least about 0.05 weight percent to about 3.0 weight percent but preferably about 0.1 to about 0.2 weight percent of the polymerization initiator based on total weight of the diene monomer in the emulsion polymerization system.

Additional features and advantages of the instant invention will be made evident upon reference to the following detailed description.

**Detailed Description of the Preferred Embodiments**

Conventional emulsion polymerization systems (conditions) consist of water (30-70%), a surfactant (such as sodium lauryl sulfate, dodecylamine hydrochloride or fatty acid soaps) as well as a free-radical generator (such as alkali persulfate or organic peroxide). The monomers being polymerized may be added gradually to the polymerization system or they may all be present from the start. The metal chelating agent is added prior to and/or during the polymerization of the diene monomers. Further, the polymer produced is often isolated by coagulation, solvent evaporation or spray drying.

It is further within the scope of this invention to add vinyl monomers such as acrylonitrile, divinylbenzene and styrene to the emulsion polymerizations described above since they are conventionally employed to alter the properties of polymer latices.

The above-described emulsion polymerizations may be carried out in typical reaction vessels including stainless steel and glass reactors. Further, the benefits of the instant invention may be appreciated regardless of the type of reactor employed. Since it has been discovered that iron salts can induce decomposition of emulsion polymerization initiators, it is expected that the benefits of the instant invention will peak in systems containing high levels of iron contamination (originating from steel reactor walls) since the metal chelating agent will inhibit such decomposition by sequestering any iron containing compounds.

Notwithstanding this fact, the benefits of the instant invention may also be realized in situations where a stainless steel reactor is not employed since iron containing and various metal containing compounds that traditionally contaminate emulsion polymerization systems will also be sequestered by the metal chelating agent. Moreover, it is believed that the metal chelating agents employed in the instant invention may activate emulsion polymerization initiators such as potassium persulfate.

The following examples and table are provided to further illustrate and facilitate the understanding of the invention. All products obtained can be confirmed by conventional techniques such as proton and carbon 13 nuclear magnetic resonance spectroscopy as well as electron microscopy and light scattering.

**Example 1**

A small mouth, thick walled 12 oz. glass bottle was charged with 10.3g of 15% aqueous fatty acid soap (derived from beef tallow), 0.15g of tetrasodium pyrophosphate, 0.10g t-dodecyl mercaptan, 66.0g filtered demineralized water and 0.078g of 50% aqueous KOH. 50.0g of butadiene was distilled from a tank to the glass bottle. Subsequently, the bottle was sealed with a rubber septum and bottle cap and 2.5 mL of potassium

persulfate solution (3.5% aqueous solution) was added with a syringe. The bottle was then placed in a polymerization bath and agitated. The bath was heated to 63°C over a 1/2 hour period and maintained at that temperature for 9 hours. Following this period, the bath was maintained at 71°C for 5 hours before being cooled to room temperature. Several drops of diethylhydroxylamine were added to deactivate any remaining initiator and to stabilize the emulsion. The desired polymer was recovered from the latex by coagulation, filtration, water washing and drying in a vacuum oven at 35°C. The percent yield of polymer was 100%.

**Example 2**

Example 2 was prepared in a manner similar to Example 1 except that the reaction was repeated without the mercaptan. The percent yield of polymer was 78%.

**Example 3**

Example 3 was prepared in a manner similar to Example 1 except that 0.23g of tetrasodium EDTA dihydrate was used instead of tetrasodium pyrophosphate and no mercaptan was employed. The percent yield of polymer was 99%.

**Example 4**

Example 4 was prepared in a steel autoclave in a manner similar to Example 1 except that potassium persulfate was added before the addition of butadiene and 400 grams of butadiene were added via distillation from a supply tank to the autoclave. All other reagents were added in increased amounts proportionate to the increase in butadiene and the desired polymer was recovered from the latex by coagulation, filtration, water washing and drying in a vacuum oven at 35°C. The percent yield of polymer was 92%.

**Example 5**

Example 5 was prepared in a manner similar to Example 4 except that the reaction was repeated without the mercaptan. The percent yield of polymer was 9%.

**Example 6**

Example 6 was prepared in a manner similar to Example 4 except that the reaction was repeated without the mercaptan but with 1.85g of tetrasodium EDTA dihydrate. The percent yield of polymer was 90%.

**Example 7**

Example 7 was prepared in a manner similar to Example 4 except that an equimolar quantity of the tripotassium salt of nitrilotriacetic acid was added to the polymerization of butadiene in lieu of EDTA and no mercaptan was present. The percent yield of polymer was 94%.

The latices in the table which follows have been prepared in the manner described for Example 1 except for the replacement of TPP with EDTA and the addition of stainless steel filings where noted. The data in said table confirms the new and unexpected results obtained in the invention and said new and unexpected results being polymerization of substantially all diene monomers in the presence of metal chelating agents and polymerization initiators without employing chain-transfer agents and electrolytes. It is also noted herein that metal chelating agents other than tetrasodium salts of EDTA and trisodium salts of NTA may be employed including other salts of EDTA, salts of nitrilotriacetic acid, substituted phenanthrolines, ethylene diamine, as well as mixtures thereof.

Further, entries A-C are provided to demonstrate the effectiveness of metal chelating agents such as EDTA when chain-transfer agents like mercaptan are omitted. Entries D-I are provided to demonstrate the effect of stainless steel on the reactions since stainless steel reactors are most often employed.

| Entry | Mercaptan[a] | Stainless Steel (g)[b,c] | Additive[d] | % Yield Polybutadiene |
|---|---|---|---|---|
| A | yes (control) | 0.0 | TPP | 100.0 |
| B | no | 0.0 | TPP | 78.0 |
| C | no | 0.0 | EDTA | 99.0 |
| D | no | 1.5 | TPP | 16.0 |
| E | no | 1.5 | EDTA | 98.0 |
| F | no | 3.0 | TPP | 41.0 |
| G | no | 3.0 | EDTA | 100.0 |
| H | no | 6.0 | TPP | 8.0 |
| I | no | 6.0 | EDTA | 100.0 |

a t-dodecyl mercaptan

b weight of #316 stainless steel filings per 50g butadiene

c Stainless steel filings were utilized to simulate polymerization reactions in a stainless steel reactor

d (TPP): tetrasodium pyrophosphate

## Claims

1. A process for producing polydiene latices comprising the step of subjecting diene monomers to a metal chelating agent and a polymerization initiator under emulsion polymerization conditions to polymerize said diene monomers and produce a polydiene latex.

2. A process for producing polydiene latices in accordance with claim 1 wherein said diene monomers are represented by the formula

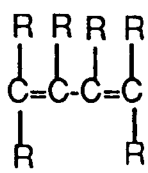 ,

and each R is independently a hydrogen, $C_1$-$C_5$ hydrocarbon, halogen or substituted or unsubstituted aromatic radical.

3. A process in accordance with claim 2 wherein each R is hydrogen.

4. A process in accordance with claim 1 wherein said metal chelating agent is a salt of ethylenediaminetetraacetic acid, a salt of nitrilotriacetic acid or mixtures thereof.

5. A process in accordance with claim 4 wherein said metal chelating agent is tetrasodium ethylenediaminetetraacetate, trisodium nitrilotriacetate or mixtures thereof.

6. A process in accordance with claim 1 wherein said polymerization initiator is potassium persulfate.

7. A process in accordance with claim 1 wherein said polydiene latex is recovered by coagulation, solvent

evaporation or spray drying.

**8.** A process in accordance with claim 1 wherein no more than about 5.0 weight percent of said metal chelating agent is employed based on total weight of diene monomer in the process.

**9.** A process in accordance with claim 8 wherein about 0.1 to about 1.0 weight percent of said metal chelating agent is employed based on total weight of diene monomer in the process.

**10.** A process in accordance with claim 1 wherein about 0.05 to about 3.0 weight percent of said polymerization initiator is employed based on total weight of diene monomer in the process.

**11.** A process in accordance with claim 9 wherein about 0.1 to about 0.2 weight percent of said polymerization initiator is employed based on total weight of diene monomer in the process.

**12.** A process in accordance with claim 1 wherein no mercaptan is employed when producing said polydiene latex.

**13.** A process in accordance with claim 1 wherein no electrolytes are employed when producing said polydiene latex.

European Patent Office

# EUROPEAN SEARCH REPORT

Application Number
EP 94 30 7803

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | US-A-3 364 165 (C.A.ZIMMERMAN) * examples * | 1-13 | C08F36/04 C08F2/22 |
| X | US-A-3 432 455 (V.M.RASICCI) * column 5, line 30 - column 37 * | 1-11,13 | |
| X | FR-A-1 392 382 (DUNLOP RUBBER COMPANY LIMITED) 1 February 1965 * "résumé", 2i; examples * | 1-11 | |
| X | FR-A-2 362 168 (AKZO N.V.) * claims; examples * | 1-11 | |
| | | | TECHNICAL FIELDS SEARCHED (Int.Cl.6) |
| | | | C08F |

The present search report has been drawn up for all claims

| Place of search | Date of completion of the search | Examiner |
|---|---|---|
| THE HAGUE | 9 February 1995 | Van Humbeeck, F |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)